Europäisches Patentamt

European Patent Office

Office européen des brevets

(11) Numéro de publication: **0 378 475**

**A1**

## (12) DEMANDE DE BREVET EUROPEEN

(21) Numéro de dépôt: **90400069.2**

(22) Date de dépôt: **10.01.90**

(51) Int. Cl.5: **H04N 1/00, H04Q 11/04**

(30) Priorité: **13.01.89 FR 8900367**

(43) Date de publication de la demande:
**18.07.90 Bulletin 90/29**

(84) Etats contractants désignés:
**BE CH DE ES GB IT LI NL SE**

(71) Demandeur: **SCHLUMBERGER INDUSTRIES**
**50, avenue Jean Jaurès**
**F-92120 Montrouge(FR)**

(72) Inventeur: **Barraud, Claude**
**7, rue de Solférino**
**F-75007 Paris(FR)**

(74) Mandataire: **Dronne, Guy**
**SCHLUMBERGER INDUSTRIES 50, avenue**
**Jean Jaurès**
**F-92120 Montrouge(FR)**

(54) **Système téléserveur à graphisme amélioré.**

(57) Les récepteurs vidéotex ($T_1$, $T_2$) sont reliés au réseau numérique RNIS. Sur ce réseau des serveurs vidéotex (SV1, SV2) et des serveurs d'images (SG1, SG2) sont connectés. En appelant un serveur vidéotex par la procédure classique, on peut de plus recevoir les images du serveur d'images associé, par un canal du réseau RNIS au mode transparent.

FIG.2

EP 0 378 475 A1

## SYSTEME TELESERVEUR A GRAPHISME AMELIORE

La présente invention concerne un système téléserveur permettant de transmettre des graphismes, notamment des images, de qualité améliorée.

Les systèmes téléserveurs connaissent un développement très important, notamment en France, par le système exploité sous la marque TELETEL. Dans un tel système des terminaux à écran de visualisation appelés MINITEL peuvent accéder (au départ) par des lignes téléphoniques normales à des centres serveurs. A l'aide de numéros d'identification chaque détenteur d'un terminal peut avoir accès à des bases de données gérées par différents prestataires de service. La facturation spécifique se fait dans le cas de certains numéros d'appel à partir du numéro appelé par le détenteur du terminal en fonction du temps de connexion au centre serveur. Par ce moyen il est possible de se connecter à des serveurs de natures très différentes qui vont de l'annuaire téléphonique jusqu'à des jeux vidéo.

Une des limites de ce système réside dans le fait qu'il n'est pas possible de transmettre vers le terminal un graphisme, par exemple une image, présentant une bonne définition et une bonne qualité graphique. Ceci est dû à la limitation du débit de transfert d'informations imposée par le réseau téléphonique commuté stantard qui est de l'ordre de 1200 bauds. Or il apparait que dans de nombreux cas la possibilité de transmettre un graphisme de qualité serait une amélioration très sensible du service fourni, ou permettrait même de fournir de nouveaux services et donc d'augmenter le nombre d'organismes serveurs intervenant sur ce type de système et le nombre de terminaux installés.

Toutefois, une telle évolution ne connaîtra un réel succès que si tous les partenaires concernés en retirent un intérêt économique : meilleur service pour l'usager, augmentation du trafic pour l'opérateur du réseau ; et surtout, augmentation des recettes pour le fournisseur de services lui permettant d'amortir les investissements supplémentaires requis tels qu'un centre serveur d'images de qualité.

Par exemple, dans le cas où l'organisme serveur est une agence ou un groupement d'agences immobilières, il serait utile pour pouvoir transmettre au détenteur du terminal une photographie de la maison à vendre ou à louer, ou bien un plan détaillé et coté de l'appartement à vendre. Bien d'autres utilisations pourraient être décrites telles que des agences de voyage, de la vente par correspondance etc...

La transmission de graphismes de qualité soulève à priori à la fois des problèmes d'utilisation de réseaux de transmission autres que le réseau téléphonique commuté standard et de modes de paiement des prestations.

La présente invention faisant appel au réseau numérique de transmission d'informations appelé RNIS en France, il est nécessaire de le décrire succinctement, ce réseau étant par ailleurs décrit en détails dans la norme I du CCITT. Dans le réseau téléphonique commuté, du moins en France, la transmission des informations se fait le plus souvent sous forme numérique entre les différents centraux téléphoniques et la transmission de l'information se fait sous forme analogique entre chaque poste téléphonique et le central téléphonique auquel il est raccordé. Dans le réseau RNIS la transmission des informations est également numérique entre le central téléphonique et les postes téléphoniques. Physiquement la liaison entre un central et un poste téléphonique est réalisé par deux fils conducteurs du type réseau téléphonique commuté (RTC). Il existe deux types d'abonnement : Un abonnement dit à accès primaire et un abonnement dit à accès de base. L'invention concerne plus spécifiquement l'accès de base. Dans ce type d'abonnement, l'abonné dispose de trois canaux : deux canaux dits canaux B pour le transfert de l'information "utile" et un canal dit canal D qui est un canal de signalisation servant à transmettre les informations nécessaires notamment à l'établissement des communications et, éventuellement, au paiement des communications. Selon la norme actuellement en vigueur chaque canal B permet de transmettre 64 kbits/seconde et le canal D 16 kbits/seconde. Un canal RNIS peut fonctionner selon deux modes différents selon le montage du terminal raccordé au réseau. Dans le mode dit "transparent" le terminal raccordé reçoit l'information sous forme numérique. C'est le mode normal de connexion au réseau RNIS. Dans le mode dit "non-transparent", le terminal raccordé reçoit l'information sous forme analogique, donc comme s'il était raccordé au RTC standard.

En outre, dans la description qui suit il faudra comprendre les termes "informations non-graphiques" et "informations graphiques" ou "informations graphiques de qualité" de la manière suivante. Une information est dite "graphique" ou "graphique de qualité" si ces informations permettent d'élaborer sur l'écran du terminal une image conforme au standard CCIR c'est à dire présentant 720 x 575 pixels, chaque pixel étant défini par 16 bits d'informations de couleur ou bien de façon plus générale des informations alphaphotographiques. Les informations "non-graphiques" sont les informations qui permettent de faire apparaître sur l'écran du terminal des données ou des images non conformes à la présentation alphaphotographique. Ces informations, sont par exemple, typiquement "videotex", en France "alpha mosaïque". Les informations sont celles qui sont distribuées par le système TELETEL standard.

Pour remédier à cet inconvénient un objet de l'invention est de fournir un système téléserveur permettant de délivrer des images de qualité sans nécessiter la mise en place d'un nouveau réseau de distribution physique et autorisant un mode de paiement compatible avec le système TELETEL et favorisant les intérêts économiques de chacun des partenaires.

Pour atteindre ce but le système téléserveur, selon l'invention, comprend au moins un centre d'émission d'informations non-graphiques, une pluralité de terminaux pour recevoir des informations et des moyens de liaison entre ledit centre et lesdits terminaux et il se caractérise en ce qu'il comprend en outre un centre d'émission d'informations graphiques de qualité et en ce que les moyens de liaison comprennent l'utilisation d'un réseau numérique (RNIS) connectant lesdits terminaux sur des accès de base, chaque accès de base comportant deux canaux de transmission B, et un canal D de signalisation, un premier canal B étant utilisé en mode non transparent pour la transmission d'informations non graphiques et le deuxième canal B étant utilisé en mode transparent pour la transmission d'informations graphiques de qualité, et en ce que chaque terminal comprend des moyens pour permettre à l'utilisateur du terminal de commander la transmission desdites informations graphiques de qualité en réponse à une information reçue par le terminal via ledit canal B à transmission en mode non transparent.

On comprend qu'ainsi le système Téléserveur ne nécessite la mise en place d'aucun moyen nouveau de transmission puisque le réseau numérique RNIS est déjà développé et qu'il utilise comme moyen de base physique de transmission le réseau téléphonique normal. En revanche grâce à l'utilisation de ce type de transmission numérique de l'information (mode transparent) il est possible de donner accès au système téléserveur à des organismes dont la fourniture des prestations nécessite de pouvoir transmettre vers l'utilisateur des images d'une très grande qualité.

De plus un tel système téléserveur est entièrement compatible avec un système téléserveur classique du type TELETEL.

Selon un mode de mise en oeuvre préféré le terminal comporte des moyens pour mémoriser l'information graphique de qualité transmise par le canal B numérique (mode transparent), des moyens pour interrompre la liaison avec lesdits centres d'émission, et des moyens pour supprimer lesdites informations graphiques mémorisées en réponse à l'actionnement des moyens d'interruption.

Ainsi le canal effectivement utilisé en mode transparent (numérique) ne sert que pendant un temps très réduit correspondant à la durée de transmission de l'information nécessaire à la définition d'une image ou d'un nombre limité d'images. Cependant, comme l'information relative à une image est "effacée" à la fin d'une communication utilisant le canal B non transparent l'utilisateur ne peut se servir abusivement du système, c'est à dire au délà du prix qu'il a payé, pour se constituer des collections d'images.

Selon une autre caractéristique de l'invention, le terminal comprend un dispositif de lecture/écriture dans un support d'information amovible apte à mémoriser des soldes successifs, pour modifier ledit solde en fonction de signaux de taxation reçus par ledit terminal.

D'autres caractéristiques et avantages de l'invention apparaitront plus clairement à la lecture de la description qui suit de plusieurs modes de réalisation de l'invention donnés à titre d'exemples non limitatifs. La description se réfère au dessin annexé sur lequel :

La figure 1 montre l'organisation générale d'un système téléserveur selon l'invention ;

La figure 2 montre en détails un terminal raccordé au système téléserveur selon l'invention ;

La figure 3 montre une variante de réalisation du terminal de la figure 2.

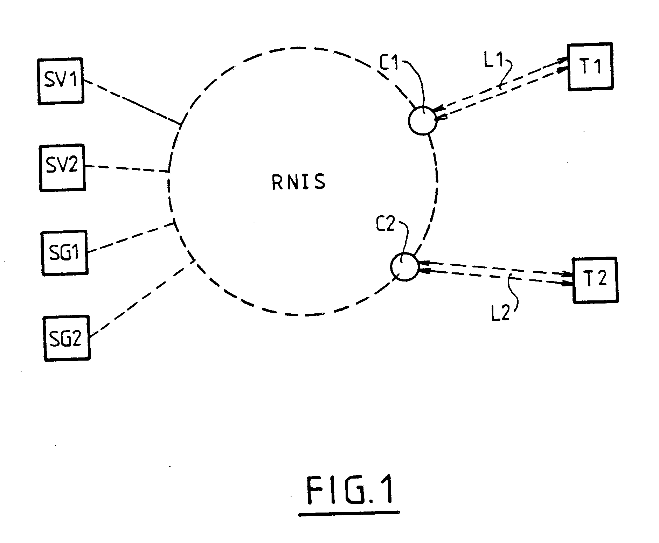

En se référant tout d'abord à la figure 1, on va décrire l'ensemble du système téléserveur selon l'invention. Il comprend un certain nombre de serveurs ou centres d'émission. On trouve d'une part des serveurs SV1, SV2... qui délivrent des informations non graphiques ou videotex, et des serveurs SG1, SG2... qui délivrent des informations graphiques. Ces serveurs sont raccordés au réseau RNIS. Dans ce réseau on a figuré les centraux téléphoniques C1 et C2 ainsi qu'un premier terminal T1 raccordé au central C1 et un deuxième terminal T2 raccordé au central C2, par des liaisons L1 et L2 du type RNIS. Les liaisons L1 et L2 définissent chacune deux canaux B de données et un canal D de signalisation.

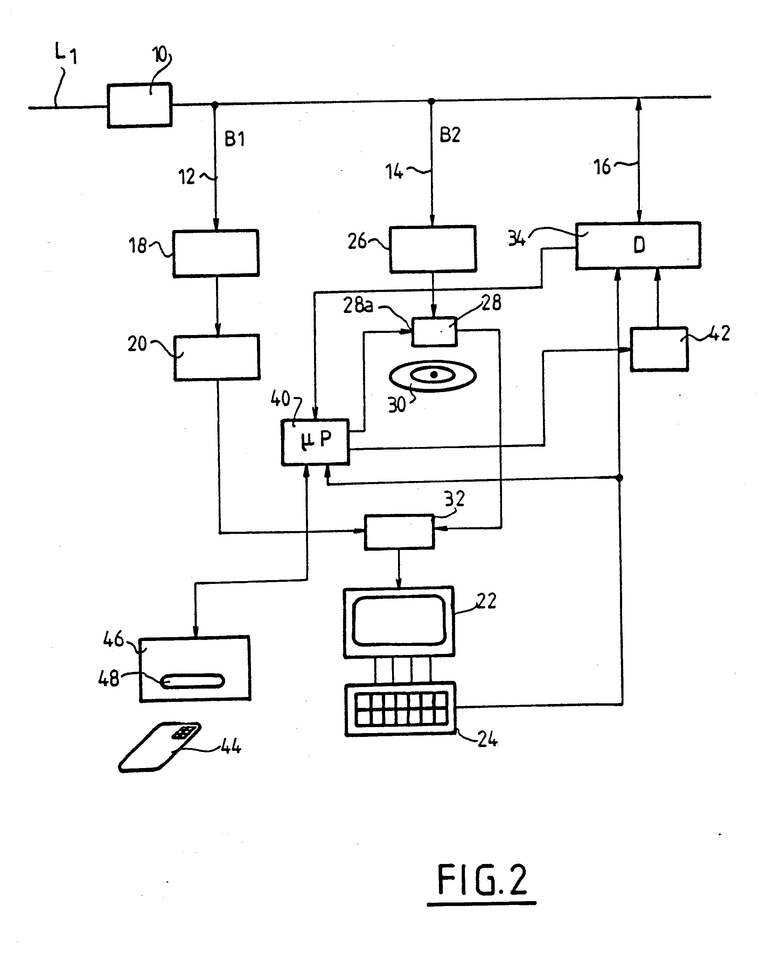

On va maintenant se rapporter à la figure 2 pour décrire en détail un terminal selon l'invention, par exemple le terminal T1 de la figure 1. La ligne L1 est raccordée à un circuit interface 10 dit du type S dans le système RNIS. A la sortie du circuit 10 on a représenté les lignes 12, 14 et 16 correspondant respectivement aux canaux B1 et B2 et au canal D. La ligne 12 est reliée à un circuit adaptateur 18 de type standard RNIS qui rend le canal B1 non transparent, c'est à dire apte à transmettre des signaux analogiques. Le circuit 18 est relié à un terminal TELETEL 20 standard. Le terminal 20 est associé à un écran de visualisation 22 à haute définition et à un clavier standard 24. Les composants 20, 22 et 24 forment ce qu'on appelle habituellement MINITEL sauf en ce qui concerne la qualité de l'écran.

La ligne 14 (canal B2) est reliée à un circuit 26 standard compresseur/décompresseur d'images. La fonction de ce circuit sera explicitée ultérieurement. Le circuit 26 est relié à une tête 28 de lecture/écriture/effacement associée à un disque "dur" mémoire 30. La tête est relié au circuit de commande 32 de l'écran 22. Le canal B2 est donc transparent. La ligne 16 (canal D) est relié à un circuit 34 de traitement des informations de signalisation qui transitent dans les deux sens via le canal D. Le terminal T1 comprend également un microprocesseur 40 pour gérer l'ensemble des composants du terminal. Le microprocesseur 40 est relié à l'entrée de commande 28 a de la tête 28 de lecture/écriture/effacement. Il est également relié au clavier 24, au terminal TELETEL 20, au circuit de traitement 34 et à un circuit 42 de numérotation RNIS, lui-même relié au circuit de traitement 34. Dans le mode de réalisation représenté sur la figure 2, le paiement des prestations fournies est effectué à l'aide d'une carte à mémoire électronique 44. Pour cela un dispositif de lecture/écriture 46 est relié au microprocesseur 40. La carte 44 est, par exemple, à prépaiement du type télécarte. Son circuit intégré comprend une mémoire programmable, chaque point de mémoire correspond à une unité de tarification. Le lecteur 46 peut lire les points de mémoire déjà écrits dans la carte et écrire de nouveaux points de mémoire au fur et à mesure de la consommation d'unités de tarification. Un tel lecteur est bien connu ainsi que les procédures particulières de dialogue entre la carte et le lecteur pour vérifier l'authenticité de la carte et pour modifier le solde disponible dans la mémoire de la carte. Cette partie du terminal T1 ne sera donc pas décrite plus en détails.

On va maintenant décrire la façon d'utiliser le terminal T1. L'utilisateur met sous tension le terminal et introduit sa carte 44 dans la fente 48 du lecteur 46. On supposera que la carte est authentique et présente un solde suffisant. A l'aide du clavier 24 l'utilisateur compose le numéro d'appel du serveur auquel il veut se connecter. Par exemple, il s'agit d'un groupement d'agences immobilières. Puis il procède exactement comme avec un MINITEL standard via le canal B1 qui est non-transparent. Les impulsions de tarification arrivent au circuit 34 via le canal D. Elles sont transmises au microprocesseur 40 qui commande le lecteur 46 pour "griller" un point mémoire de la carte 44 à chaque impulsion de taxation.

On supposera que le serveur auquel l'usager s'est connecté permet d'obtenir, outre des informations vidéotex (non graphiques), des informations graphiques, par exemple trois plans d'appartement. Une information (non-graphique) apparait sur l'écran 22 pour inviter l'usager à consulter ces plans s'il le souhaite. Si tel est le cas, il compose sur le clavier 24 la commande convenable. Le clavier 24 délivre vers le microprocesseur 40 un signal spécifique.

Le microprocesseur 40 élabore alors le numéro d'appel du serveur "graphique" associé au serveur "vidiotex" auquel le terminal est déjà connecté. Ce numéro est transmis au circuit de numérotation 42 puis au circuit de traitement 34 et envoyé sur le réseau via le canal D. Les informations graphiques arrivent en retour, via le canal B2 transparent, au circuit compresseur/décompresseur 26. Les informations numériques associées à une image au standard CCIR correspondent, comme on l'a déjà indiqué, à 720 x 576 x 16 bits, soit environ 6,6 Mbits. Le serveur d'images est muni d'un compresseur d'images qui permet de diviser par 20 le nombre de bits d'information nécessaire pour définir une image. Le nombre de bits à transmettre via le canal B2 est donc de 330 kbits. Compte tenu du débit des canaux B cela représente un temps d'utilisation de l'ordre de 5 secondes. Le circuit 26 a pour fonction de "décompresser l'image". Les informations graphiques reçues par le circuit 26 sont mémorisées sur le disque 30 à l'aide de la tête d'écriture 28. Simultanément le circuit 34 reçoit du central téléphonique, via le canal D, les impulsions de taxation. A la réception de chaque impulsion le microprocesseur 40 commande le lecteur de cartes 46 pour "griller" un point mémoire de la carte. La carte est donc décrémentée par les impulsions de taxation TELETEL et par les impulsions de taxation RNIS dues au canal B transparent. L'unité de tarification TELETEL correspond à 40 secondes de communication. L'unité de tarification RNIS correspond à une durée de communication qui dépend de la distance entre le serveur et le terminal. Lorsque cette distance est inférieure à 50 km cette durée est égale à 23 secondes. On voit donc que pour la réception de quatre images il suffit d'acquitter une seule taxe. L'incidence de la tarification RNIS est donc négligeable par rapport à celle de la tarification TELETEL standard.

Lorsque l'usager souhaite interrompre la liaison avec le serveur il entre la commande convenable à l'aide du clavier 24. La communication est interrompue. Lorsque le microprocesseur 40 reçoit le signal d'interruption, il commande la tête 28 pour que celle-ci efface sur le disque dur l'ensemble des informations correspondant aux images reçues.

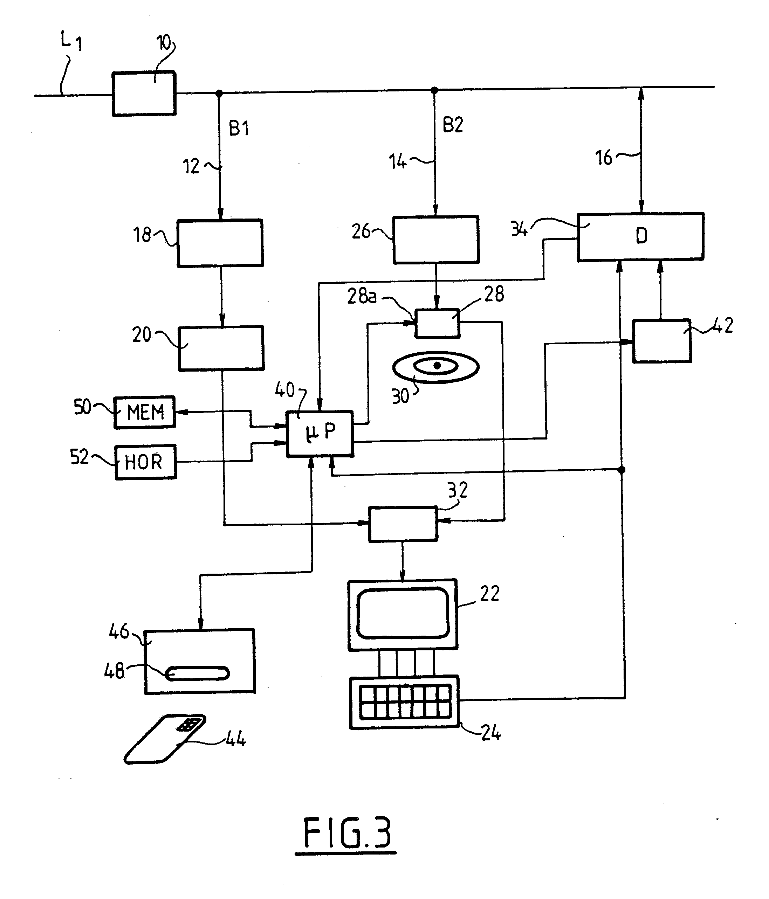

La figure 3 montre un deuxième mode de réalisation du terminal T1 qui ne diffère de celle de la figure 2 que par le mode de détermination du montant du paiement à effectuer pour la prestation de service. Selon le mode de réalisation de la figure 2 le terminal T1 reçoit des impulsions de taxation correspondant au réseau TELETEL et au réseau RNIS. Ce sont ces impulsions qui servent à décrémenter le solde mémorisé dans la carte de l'usager. Selon le mode de réalisation de la figure 3, les éléments de tarification se trouvent inclus dans le terminal. Pour cela le terminal comprend en plus une mémoire 50 de tarification et une horloge 52 qui sont reliées au microprocesseur 40. La mémoire 50 contient une table de tarification qui comporte pour le système TELETEL et pour le système RNIS la durée de chaque unité de taxation. Pour le RNIS, dans le cas d'un canal transparent, la table fait intervenir la distance du serveur d'images déterminée à partir du numéro d'appel du serveur d'images. A partir de l'information de temps et des données contenues dans la mémoire 50, le microprocesseur 40 élabore les impulsions de taxation TELETEL et RNIS qui sont appliquées au lecteur 46 comme cela a été expliqué en liaison avec la figure 2.

Il découle de la description précédente que le système téléserveur, selon l'invention, satisfait bien aux conditions qui avaient été imposées. Pour l'exploitant des réseaux la possibilité de transmettre des images doit augmenter le nombre de prestataires de service désirant opérer sur ces réseaux. De plus le développement du réseau RNIS bénéficiera du succès du système TELETEL. Pour les prestataires de service la transmission d'images rend le service plus attractif et augmente donc le nombre de communications. En outre, la consultation des images augmente la durée de la communication et donc le montant de la redevance versée au prestataire de service.

## Revendications

1. Système téléserveur comprenant au moins un centre d'émission d'informations non-graphiques, une pluralité de terminaux pour recevoir des informations et des moyens de liaison entre ledit centre et lesdits terminaux et caractérisé en ce qu'il comprend en outre un centre d'émission d'informations graphiques de qualité et en ce que les moyens de liaison comprennent l'utilisation d'un réseau numérique du type RNIS connectant lesdits terminaux sur des accès de base, chaque accès de base comportant deux canaux de transmission B, et un canal D de signalisation, un premier canal B étant utilisé en mode non transparent pour la transmission d'informations non graphiques et le deuxième canal B étant utilisé en mode transparent pour la transmission d'informations graphiques de qualité, et en ce que chaque terminal comprend des moyens pour permettre à l'utilisateur du terminal de commander la transmission desdites informations graphiques de qualité en réponse à une information reçue par le terminal via ledit canal B à transmission en mode non transparent.

2. Système selon la revendication 1, caractérisé en ce que chaque terminal comporte des moyens pour mémoriser l'information graphique transmise par le canal B en mode transparent, des moyens pour interrompre la liaison avec lesdits centres d'émission, et des moyens pour supprimer lesdites informations graphiques mémorisées en réponse à l'actionnement des moyens d'interruption.

3. Système selon l'une quelconque des revendications 1 et 2, caractérisé en ce que ledit terminal comprend un dispositif de lecture/écriture dans un support d'information amovible apte à mémoriser des soldes successifs, pour modifier ledit solde en fonction de signaux de taxation reçus.

4. Système selon l'une quelconque des revendications 1 à 3, caractérisé en ce que ledit terminal reçoit des premiers signaux de taxation en fonction de la transmission des informations par le canal B en mode non transparent et des deuxièmes signaux de taxation en fonction de la transmission des informations par voie numérique par le canl B en mode transparent.

5. Système selon la revendication 4, caractérisé en ce que lesdits signaux de taxation sont transmis par ledit canal D de signalisation.

6. Système selon l'une quelconque des revendications 1 à 3, caractérisé en ce que ledit terminal comprend des moyens pour élaborer lui-même des signaux de taxation pour la transmission des informations graphiques et des signaux de taxation pour la transmission des informations non-graphiques.

SV1

SV2

SG1

SG2

RNIS

C1

L1

T1

C2

T2

L2

## FIG.1

FIG.2

## FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IEEE JOURNAL ON SELECTED AREAS IN COMMUNICATIONS, vol. SAC-4, no. 4, juillet 1986, pages 625-632, IEEE, New York, US; M. TASTO: "Terminals for broad-band office communications" * Page 627, colonne de droite, ligne 26 - page 628, colonne de gauche, ligne 3; page 628, colonne de droite, ligne 31 - page 629, colonne de droite, ligne 43; page 630, colonne de gauche, lignes 20-21 * --- | 1,2 | H 04 N 1/00 H 04 Q 11/04 |
| A | WO-A-8 702 851 (PHALIPPOU) * En entier * ----- | 1,2 | |

DOMAINES TECHNIQUES RECHERCHES (Int. Cl.5)

H 04 N 1/00
H 04 Q 11/00

Le présent rapport a été établi pour toutes les revendications

| Lieu de la recherche | Date d'achèvement de la recherche | Examinateur |
|---|---|---|
| LA HAYE | 06-04-1990 | HAZEL J.F. |